# EUROPÄISCHE PATENTSCHRIFT

(11) **EP 0 988 442 B1**
(45) Veröffentlichungstag und Bekanntmachung des Hinweises auf die Patenterteilung: **27.03.2002**
(21) Anmeldenummer: 98929431.9
(22) Anmeldetag: 08.06.1998
(51) Int. Cl.: F01D 15/10, F02C 1/02, F17D 1/04

(54) **GASENTSPANNUNGSTURBINE FÜR KLEINE LEISTUNGEN**
LOW-OUTPUT GAS DECOMPRESSION TURBINE
TURBINE DE DETENTE DE GAZ POUR FAIBLES PUISSANCES

(30) Priorität: 10.06.1997 DE 19724460
(43) Veröffentlichungstag der Anmeldung: 29.03.2000
(73) Patentinhaber: A.G. Kühnle, Kopp & Kausch, 67227 Frankenthal (DE)
(72) Erfinder: KEIPER, Rudolf, D-64295 Darmstadt (DE); MÜLLER, Thomas, D-64683 Einhausen (DE); HEINTZ, Theo, D-67227 Frankenthal (DE)
(74) Vertreter: Neugebauer, Jürgen, Dipl.Phys.
(86) Internationale Anmeldenummer: EP9803432
(87) Internationale Veröffentlichungsnummer: WO9857046

(56) Entgegenhaltungen:
- EP-A- 0 004 398
- GB-A- 1 557 943
- GB-A- 2 084 653
- US-A- 4 372 113
- PATENT ABSTRACTS OF JAPAN vol. 096, no. 009, 30. September 1996 & JP 08 121699 A (OSAKA GAS CO LTD), 17. Mai 1996

## Beschreibung

Die vorliegende Erfindung betrifft eine Anordnung für eine Gasentspannungsturbine zur Verwendung in einem Gasversorgungsrohrsystem, insbesondere in einem Fernleitungsrohrsystem zur Bereitstellung von Gas an Niederdruckverbraucher.

In heutigen Gasfernleitungsrohrsystemen wird insbesondere Erdgas über Strecken von bis zu tausenden von Kilometern an die Endverbraucher für Befeuerungszwecke im häuslichen oder industriellen Bereich geliefert. Um das Gas über diese großen Strecken möglichst verlustfrei transportieren zu können, ist es extrem verdichtet und steht in speziellen Hochdruckleitungen unter sehr hohen Drücken von typischerweise 80 bar und darüber. Damit das Gas in die sicherheitstechnisch wesentlich weniger aufwendig ausgelegten Niederdruckleitungssysteme der Endverbraucher eingespeist werden kann, muß es, gegebenenfalls in mehreren hintereinander geschalteten Stufen, auf geringere Drücke entspannt werden. Dabei wird in jeder Entspannungsstufe ein Teil der im verdichteten Gas gespeicherten inneren Energie freigesetzt.

Bisher war es aus wirtschaftlichen Gründen wenig attraktiv, die in den Entspannungsendstufen im Gasfernleitungsrohrsystem zwischen lokalen Zentralen (z. B. kommunale Gaswerke) und den eigentlichen Endverbrauchern (z.B. private Gasfeuerungsheizungen für die Wohnraumbeheizung) aus dem entspannten Gas freiwerdende Energie aufzufangen und z. B. einer Verstromung zuzuführen. Der Grund für diese fehlende Nutzung lag in dem z. B. für kommunale Gaswerke zu hohen Investitions- und Wartungsaufwand für gängige Gasturbinengeneratoren samt notwendigen Sicherheitssystemen, der in keinem wirtschaftlich sinnvollen Verhältnis zu dem aus einer solchen lokalen Stromgewinnung erzielbaren Nutzen stand.

Aus der EP 000 4398 A2 ist eine Anordnung einer Gasentspannungsturbine in einem Gasversorgungsrohrsystem nach dem Oberbegriff des Anspruchs 1 bekannt.

Ausgehend hiervon ist es Aufgabe der vorliegenden Erfindung, eine einfache, kompakte und sowohl unter sicherheitstechnischen als auch ökonomischen Aspekten ausreichende Turbinenanlage zur Gasentspannung in Endstufen von Gasfernleitungsrohrsystemen bereitzustellen, mit der eine Verstromung der aus dem entspannten Gas freigesetzten Energie möglich ist.

Diese Aufgabe wird erfindungsgemäß durch die Maßnahmen des Anspruchs 1 gelöst. Die abhängigen Ansprüche betreffen vorteilhafte Ausführungsformen der vorliegenden Erfindung.

Erfindungsgemäß ist eine Anordnung einer Gasentspannungsturbine in einem Gasversorgungsrohrsystem vorgesehen, die derart ausgestaltet ist, daß in einem Gasversorgungsrohrabschnitt zuströmungsseitig (hochdruckseitig) mindestens eine Trennwand vorgesehen ist. An oder bei dieser zumindest einen mit Düsen zum Entspannen des zuströmenden Gases versehenen Trennwand ist ein Asynchronmotor oder ein Asynchrongenerator angebracht. Der Welle des Asynchronmotors/-generators ist abströmungsseitig (niederdruckseitig) hinter den Düsen mindestens ein in Leichtbauweise ausgeführtes und vom Gasstrom angetriebenes Schaufellaufrad aufgesetzt. Es sind weiterhin Vorrichtungen zur Abführung der im Generatorbetrieb erzeugten elektrischen Energie und zu deren Einspeisung in ein Energieversorgungsnetz vorgesehen. Ferner ist eine Steuerungsvorrichtung vorgesehen, welche bei Überschreiten eines kritischen Drehzahlwerts der Welle ein Steuersignal auf ein zuströmungsseitig vor dem Asynchronmotor/-generator liegendes Sicherheitsventil zum (teilweisen) Schließen des Gasversorgungsrohrabschnitts gibt.

Bei der erfindungsgemäßen Anordnung entfallen eine Reihe sonst bei Gasturbinengeneratoren notwendiger Bauteile wie z. B. Ventilgehäuse, Turbinengehäuse und Abdampfdeckel, so daß die für solche Teile notwendigen Investitions- sowie Wartungskosten entfallen.

Weiterhin führt die Ausführung des Schaufellaufrads in Leichtbauweise, insbesondere bei Verwendung von Kunststoff oder Leichtmetall an Stelle von Stahl als Werkstoff für die Schaufellaufräder, selbst bei Verzicht auf dickwandige Umhüllungen der relativ dünnwandigen Standardniederdruckrohrleitungen zu einem im wesentlichen berstsicheren Turbinenaufbau. Dies beruht bei den erfindungsgemäß gewählten leichten Schaufeln darauf, daß selbst wenn es bei hohen Drehzahlen aufgrund von Materialermüdungserscheinungen im Dauerbetrieb zu Materialabrissen an den rotierenden Schaufeln kommt und wegfliegenden Teile auf die umgebende Niederdruckrohrleitung aufprallen, diese für sich alleine bereits in der Lage ist, der aufgrund der relativ geringen Dichte und der relativ hohen Elastizität der verwendeten Werkstoffe geringeren kinetische Energien sowie geringeren Impulsübertragungen der abgerissenen Teile standhalten zu können.

Weiterhin kann bei einer erfindungsgemäßen Anordnung für eine Gasentspannungsturbine darauf verzichtet werden, eine spezielle gasdichte Abdichtung der in der Trennwand gelagerten Welle einzurichten, so daß ebenfalls Investitions- und Wartungskosten gespart werden.

Um eine Zwangsabschaltung bzw. eine Reduktion des Gaszustroms bei zu hohen Drehzahlen eines aufgrund eines Netzausfalls "durchdrehenden" Asynchronmotors/-generators zu erwirken, kann drehzahlabhängig ein Kontrollsignal an eine Steuerungsvorrichtung wie z. B. eine lokale SPS (speicherprogrammierbare Steuerung) gegeben werden, welche bei Überschreiten eines kritischen Drehzahlwerts der Welle ein Steuersignal auf ein zuströmungsseitig vor dem Asynchronmotor/-generator liegendes Sicherheitsventil zum (teilweisen) Schließen des Gasversorgungsrohrabschnitts gibt. Dabei kann auf Ventile zurückgegriffen werden, die sowieso schon zur Kontrolle des Gasdrucks in den einzelnen Gasleitungsrohrabschnitten vorgesehen sind, so daß abermals zusätzliche Investitions- und Wartungskosten gespart werden.

Die schon erwähnte lokale SPS kann zusätzlich die Aufgabe der permanenten Überwachung der Drehzahl des Asynchronmotor/-generators übernehmen, und zwar sowohl im Anfahrbetrieb als auch im Generatorbetrieb.

Da der Asynchronmotor/-generator direkt im zuströmenden Gasstrom angebracht ist, kann auch auf die Anbringung eines zusätzlichen Lüfterrads verzichtet werden, da durch den vorbeistreichenden Gasstrom alleine bereits eine ausreichende Kühlung des Asynchronmotor/-generators erzielt werden kann.

Die durch mechanische Reibung im Asynchronmotor/-generator sowie durch Kupfer- und Eisenverluste in den Wicklungen des Asynchronmotors/-generators bedingten Wärmeverluste können zur Vorwärmung des vorbeistreichende Gasstromes verwendet werden. Dadurch bedingt kommt es zu einer Steigerung des thermodynamischen Wirkungsgrads bei der Entspannung des Gases in den Düsen auf die niederdruckseitigen Drücke und Temperaturen.

Bei Asynchronmotoren/-generatoren mit einem zweiten freien Wellenende (wie es bei Seriengeräten z. B. zum Aufsetzen eines für sonstige Anwendungen notwendigen Lüfterrads vorgesehen ist) kann zudem bei größeren gewünschten Druckgefällen auf einfache Weise eine zweistufige Expansion des durchströmenden Gases dadurch realisiert werden, daß auf beiden Wellenenden Schaufellaufräder hintereinanderliegend auf der Welle angebracht sind. Für diesen Fall ist vor dem zweiten Schaufellaufrad eine zusätzliche Trennwand vorgesehen, die ebenfalls Düsen zur Gasentspannung umfaßt. Bei dieser Anordnung wird der Gasstrom also in den Düsen der ersten Trennwand vorentspannt, dann auf das erste Schaufellaufrad gelenkt (erste Entspannungsstufe), und daran anschließend durch die Düsen der zweiten Trennwand entspannt und auf das auf derselben Welle wie das erste Schaufellaufrad aufgesteckte zweite Schaufellaufrad gelenkt (zweite Entspannungsstufe).

Selbstverständlich können auch mehrere erfindungsgemäße Gasturbinenanordnungen in einem Gasrohrleitungsabschnitt in Reihe hintereinanderliegend angeordnet werden.

Falls erwünscht kann zudem in der Gasrohrleitung auch kostengünstig eine zuströmungsseitige Vorwärmung des Gases zur weiteren Wirkungsgradsteigerung durchgeführt werden.

Um die Betriebssicherheit der erfindungsgemäßen Anordnung zu erhöhen kann zudem bei einer bevorzugten Ausführungsform längs des Innenumfangs des Gasversorgungsrohrs ein Verdickungsring im Bereich des Schaufellaufrads vorgesehen sein, wobei der Abstand zwischen der Innenseite des Verdickungsrings und dem Außenumfang des Schaufellaufrads so gewählt ist; daß sich das Schaufellaufrad bei Drehzahlen unterhalb eines vorbestimmten Drehzahlwerts frei im Verdickungsring drehen kann, wohingegen es bei Überschreiten dieses vorbestimmten Drehzahlwerts aufgrund der durch Zentrifugalkräfte bedingten radialen Streckung der Schaufeln zu einer Berührung zwischen dem Schaufellaufrad und dem Verdickungsring kommt.

Kommt es bei dieser bevorzugten Ausführungsform wegen Netzausfalls zu einem "Durchdrehen" des Asynchronmotor/-generators im Gasstrom, d. h. zu einem unkontrollierten Anstieg der Drehzahl, so werden die Schaufelräder, insbesondere wenn sie aus einem leicht dehnbaren Material wie Kunststoff bestehen, durch die ansteigenden Zentrifugalkräfte radial gestreckt, bis sie an dem außen anliegenden Verdickungsring streifen. Durch die dann einsetzenden Reibungskräfte kommt es zu einer Gegenkraft, welche die Rotation der Welle wieder abbremst, so daß selbst bei einem Versagen der an sich durch die SPS auszulösenden Zwangsabschaltung des Gasstroms ein "Durchdrehen" des Asynchronmotors/-generators verhindert werden kann.

Aufgrund der gewählten kompakten Bauweise der erfindungsgemäßen Anordnung, bei der das Schaufellaufrad innerhalb der umgebenden Rohrwandungen freizugänglich auf die Welle aufgesteckt ist, ist der Austausch eines bei einem solchen Abbremsvorgang beschädigten Schaufellaufrads zudem relativ leicht möglich.

Die Vorteile und Merkmale der vorliegenden Erfindung ergeben sich auch aus den nachfolgenden Ausführungsbeispielen in Verbindung mit den Zeichnungen.

Es zeigen:
- Fig. 1: eine schematische Darstellung einer ersten Ausführungsform einer erfindungsgemäßen Anordnung für eine Gasentspannungsturbine in einer Einbausituation, wobei es sich um einen einstufigen Aufbau mit einer Trennwand und einem Schaufellaufrad handelt; und
- Fig. 2: eine schematische Darstellung einer zweiten Ausführungsform einer erfindungsgemäßen Anordnung für eine Gasentspannungsturbine in einer Einbausituation, wobei es sich um einen zweistufigen Aufbau mit zwei Trennwänden und zwei Schaufellaufrädern handelt.

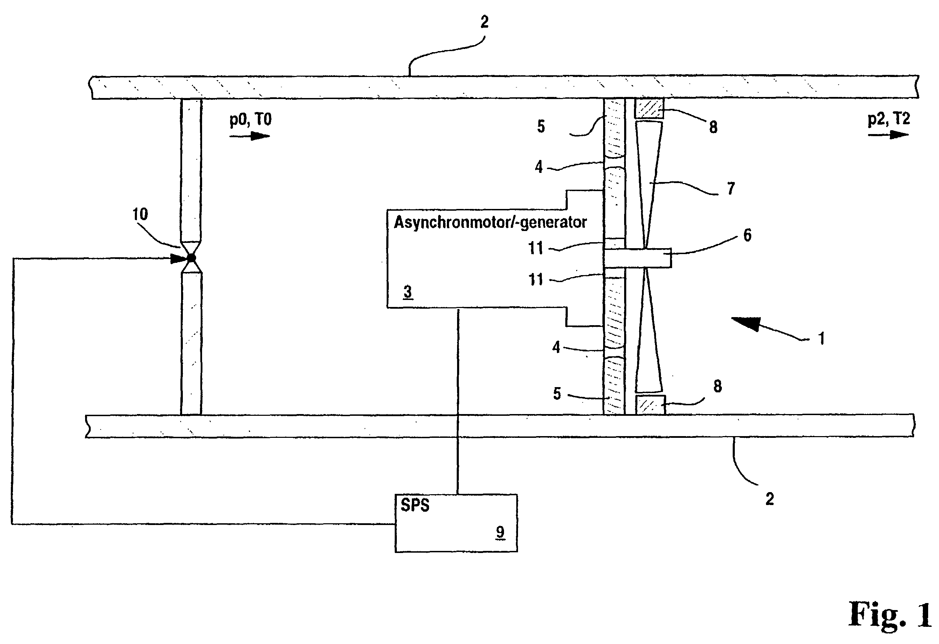

In Fig. 1 ist eine Gasentspannungsturbinenanordnung 1 in radialer Richtung mittig liegend in einer Gasrohrleitung 2 dargestellt und umfaßt einen Asynchronmotor/-generator 3, eine Trennwand 5, welche die Gasrohrleitung in radialer Richtung unterteilt und mit Düsen 4 zum Durchlaß des zuströmenden Gases versehen ist, sowie ein auf die in axialer Richtung liegende Welle 6 des Asynchronmotors/-generators 3 aufgesetztes Schaufellaufrad 7. Bei dieser Ausführungsform ist der in Fig. 1 gezeigte Asynchronmotor 3 an der Trennwand 5 befestigt und zuströmungsseitig vor dieser liegend angebracht, wobei das freie Ende seiner Welle 6 die Trennwand durchstößt.

Selbstverständlich kann der Asynchronmotor/-generator bei einer erfindungsgemäßen Anordnung aber auch abströmungsseitig hinter der Trennwand liegen, und muß zudem mit dieser nicht fest verbunden sein.

Zuströmungsseitig (in Fig. 1 linksliegend) steht das ankommende Gas unter einem Druck p0 und einer Temperatur T0, abströmungsseitig steht das Gas unter einem Druck p2 und einer Temperatur T2. Dabei ist p0 > p2 und T0 > T2. Aufgrund des Druckgefälles wird das Gas durch die Entspannungsdüsen 4 in der Trennwand 5 hindurchgepreßt und trifft abströmungsseitig auf das auf der Welle 6 des Asynchronmotors 3 aufgesetzte Schaufellaufrad 7, welches dadurch angetrieben wird.

Bekanntermaßen kann ein Asynchronmotor abhängig von seinem Schlupf, welcher ein Maß für das Verhältnis zwischen der mechanischen Drehzahl der Welle und der Drehzahl eines im Asynchronmotor rotierenden magnetischen Drehfelds ist, entweder als Motor oder als Generator betrieben werden.

Vorliegend wird der Asynchronmotor/-generator 3 im Motorbetrieb durch eine externe Netzspannung auf solche Drehzahlen gebracht, bei denen der Generatorbetrieb einsetzt. Diese notwendige Drehzahl wird dadurch aufrechterhalten, daß das außen an den Laufradschaufeln vorbeiströmenden Gas permanent einen Teil seiner Energie auf die Welle 6 überträgt. Nach Durchschreiten des Anlaufbereichs kann mit dem Asynchronmotor/-generator 3 also permanent elektrische Energie in ein Netz (nicht gezeigt) rückeingespeist werden.

Das Schaufellaufrad 7 ist bevorzugterweise in Leichtbauweise aus einem Material gefertigt, dessen Dichte niedriger als die Dichte von Stahl ist. Aufgrund der abströmungsseitig wegen des Entspannungsvorgangs reduzierten Temperatur T2 im Gasstrom ist dabei selbst die Verwendung von Kunststoffen ohne weiteres möglich.

Bei der in der Fig. 1 gezeigten Ausführungsform müssen die Dichtungen 11 der Welle 6 nicht speziell gasdicht gegenüber der Trennwand 5 abdichten, da Leckströme den Wirkungsgrad des Gesamtsystems nur vernachlässigbar beeinflussen.

Der Asynchronmotor/-generator 3 steht mit einer speicherprogrammierbaren Steuerung 9 in Verbindung, welche die Drehzahl des Asynchronmotors überwacht. Kommt es aufgrund von Schwankungen im Gasstrom oder aus sonstigen Gründen (z. B. Netzausfall) zu einem unerwünschten Anstieg der Drehzahl des Asynchronmotors über einen kritischen Grenzwert hinaus, so löst die SPS 9 ein zuströmungsseitig vor dem Asynchronmotor/-generator 3 liegendes Sicherheitsventil 10 aus, welches den Gasstrom ganz oder teilweise unterbindet.

Als zusätzliche Sicherheitsmaßnahme gegen hohe Drehzahlen des Asynchronmotors 3 kann als "Notbremse" zudem vorgesehen werden, daß das Gasversorgungsrohr im Bereich des Schaufellaufrads 7 umfangsinnenseitig mit einem Verdickungsring 8 versehen ist, wobei der Abstand zwischen der Innenseite des Verdickungsrings 8 und dem Außenumfang des Schaufellaufrads 7 so gewählt ist, daß sich das Schaufellaufrad bei Drehzahlen unterhalb eines vorbestimmten Drehzahlwerts frei im Verdickungsring 8 drehen kann, wohingegen es bei Überschreiten dieses vorbestimmten Drehzahlwerts aufgrund der durch Zentrifugalkräfte bedingten radialen Streckung der Schaufeln zu einer Berührung zwischen dem Schaufellaufrad und dem Verdickungsring kommt. Dadurch streifen die Laufradschaufeln längs des Verdickungsrings und werden dabei abgebremst.

Wie sich in der Praxis gezeigt hat, nehmen in der Regel weder der Asynchronmotor/-generator noch dessen Welle bei einer solchen "Notbremsung" einen Schaden, sondern es werden lediglich die am Verdickungsring streifenden Enden des z. B. aus Kunststoff bestehenden Schaufellaufrads etwas abgeschliffen. Aufgrund des einfachen Aufbaus der erfindungsgemäßen Anordnung für eine Gasentspannungsturbine ist es deshalb auch nach einer solchen "Notbremsung" ohne weiteres möglich, das Schaufellaufrad, welches sich frei zugänglich im Inneren des Gasversorgungsrohrs befindet, bei Bedarf auszuwechseln. In der Praxis hat sich zudem gezeigt, daß eine erfindungsgemäße Anordnung auch mehrere solche "Notbremsungen" ohne weiteres gut übersteht und ein Wechseln des Schaufellaufrads nach einer "Notbremsung" nicht unbedingt notwendig ist, sondern man durchaus turnusgemäße Wartungsintervalle zur Durchführung dieser Arbeiten abwarten kann.

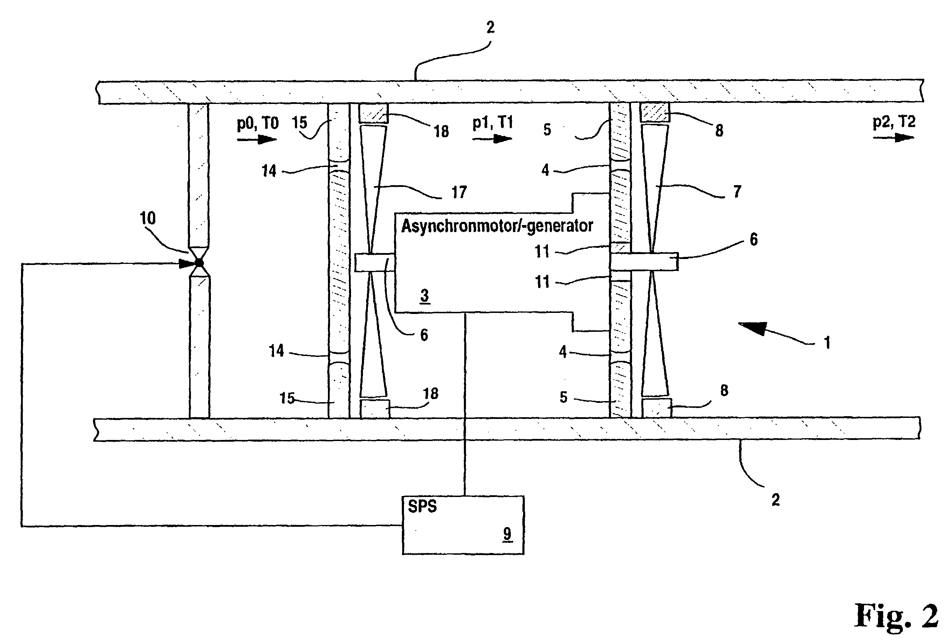

Fig. 2 zeigt in einer der Fig. 1 entsprechenden Darstellung eine zweite Ausführungsform einer erfindungsgemäßen Gasentspannungsturbinenanordnung mit einem zweistufigen Aufbau. Dabei liegt in einem Gasversorgungsrohr 2 ein Asynchronmotor 3 zwischen einer ersten mit Entspannungsdüsen 14 versehenen Trennwand 15 sowie einer zweiten mit Entspannungsdüsen 4 versehenen Trennwand 5. Abströmungsseitig hinter der ersten Trennwand liegend ist ein erstes Schaufellaufrad 17 auf die Welle 6 aufgesteckt, abströmungsseitig hinter der zweiten Trennwand liegend ist ein zweites Schaufellaufrad 7 auf die Welle 6 aufgesteckt. Die Welle 6 ist in den (nicht notwendigerweise gasdichten) Dichtungen ₋11 in der zweiten Trennwand 5 gelagert. Weiterhin kann optional ein zweiter Verdickungsring 18 um das zweite Schaufellaufrad 17 herum angeordnet sein. Ansonsten ist der Aufbau wie bereits in Verbindung mit Fig. 1 besprochen.

In den Düsen 14 in der ersten Trennwand 15 wird das zuströmende Gas in einer ersten Entspannungsstufe von der Temperatur T0 und dem Druck p0 auf die Temperatur T1 und den Druck p1 entspannt, und in den Düsen 4 in der zweiten Trennwand 5 wird das zuströmende Gas in einer zweiten Entspannungsstufe von der Temperatur T1 und dem Druck p1 auf die Temperatur T2 und den Druck p2 entspannt.

Aufgrund der bekannten Robustheit von Asynchronmotoren bzw. -generatoren sowie des einfachen und kompakten Aufbaus der erfindungsgemäßen Anordnung für eine Gasentspannungsturbine ist eine lange Lebensdauer bei geringem Wartungsbedarf einer wenig störfallanfälligen, aber im Bedarfsfall doch abschaltsicheren Anordnung gewährleistet, wodurch sich selbst bei einer relativ geringeren Vergütung für die im Generatorbetrieb in externe Netze eingespeisten elektrischen Energie über die Gesamtlebenszeit der Anordnung hinweg die Investitionskosten um ein Vielfaches amortisieren.

## Patentansprüche

1. Anordnung einer Gasentspannungsturbine (1) in einem Gasversorgungsrohrsystem;
wobei die Gasentspannungsturbine (1) an einen Asynchronmotor/-generator angeschlossen ist;
wobei Vorrichtungen zur Abführung der im Generatorbetrieb des Asynchronmotor/-generators erzeugten elektrischen Energie und zu deren Einspeisung in ein Energieversorgungsnetz vorgesehen sind; und
wobei der Asynchronmotor/-generator (3) an eine Steuerungsvorrichtung (9) angeschlossen ist, welche beim Überschreiten eines kritischen Drehzahlwerts der Welle (6) des Asynchronmotor/-generators ein Steuersignal auf ein zuströmungsseitig vor dem Asynchronmotor/-generator (3) liegendes Sicherheitsventil (10) zum (teilweisen) Schließen des Gasversorgungsrohrabschnitts gibt;
**dadurch gekennzeichnet,**
**daß** der Asynchronmotor/-generator (3) in einem Gasversorgungsrohrabschnitt (2) zuströmungsseitig an oder bei mindestens einer mit Düsen (4, 14) zum Entspannen des Gases versehenen Trennwand (5, 15) vorgesehen ist, und auf der Welle (6) des Asynchronmotor/-generators (3) abströmungsseitig mindestens ein in Leichtbauweise ausgeführtes und vom Gasstrom angetriebenes Schaufellaufrad (7, 17) aufgesetzt ist.

2. Anordnung nach Anspruch 1,
**dadurch gekennzeichnet,**
**daß** längs des Innenumfangs des Gasversorgungsrohrs (2) ein Verdickungsring (8, 18) in Höhe des zumindest einen Schaufellaufrads (7, 17) ausgeführt ist, wobei der Abstand zwischen der Innenseite des Verdickungsrings (8) und dem Außenumfang des Schaufellaufrads (7, 17) so gewählt ist, daß sich das Schaufellaufrad bei Drehzahlen unterhalb eines vorbestimmten Drehzahlwerts frei im Verdickungsring (8, 18) drehen kann, wohingegen es bei Überschreiten dieses vorbestimmten Drehzahlwerts aufgrund der durch Zentrifugalkräfte bedingten radialen Streckung der Schaufeln zu einer Berührung zwischen dem Schaufellaufrad (7, 17) und dem Verdickungsring (8, 18) kommt

3. Anordnung nach Anspruch 1 oder 2,
**dadurch gekennzeichnet,**
**daß** das mindestens eine Schaufellaufrad (7) aus Kunststoff oder einem Leichtmetall besteht.

## Claims

1. An arrangement of a gas decompression turbine (1) in a gas supply piping system;
wherein said gas decompression turbine (1) is connected to an asynchronous motor/-generator unit;
wherein means are provided for conducting away electrical energy generated in the generator mode of the asynchronous motor/-generator unit and for feeding it into an electric power net;
wherein said asynchronous motor/-generator unit (3) is connected to a control unit (9) which delivers a control signal to a safety valve (10) located upstream of the asynchronous motor/-generator unit for (partially) closing a gas supply pipe section if a critical speed value of the shaft (6) of the asynchronous motor/-generator unit (3) is exceeded;
**characterized in**
**that** the asynchronous motor/-generator unit (3) is located in a gas supply pipe section (2) on the upstream side on or close to at least one separation wall (5, 15), said at least one separation wall being provided with gas decompression nozzles (4, 14), and that at least one lightweight bladed turbine wheel (7, 17) driven by the gas stream is mounted on said shaft (6) on the downstream side of said asynchronous motor/-generator unit (3).

2. An arrangement according to claim 1,
**characterized in**
**that** a reinforcement ring (8, 18) is disposed along the inner circumference of the gas supply pipe (2) at the level of the least one bladed turbine wheel (7, 17), and that the distance between the inside of the reinforcement ring (8) and the outer circumference of the bladed turbine wheel (7, 17) is so selected that the bladed turbine wheel (7, 17) is freely rotatable within the reinforcement ring (8, 18) at speeds below a predetermined speed value, but the bladed turbine (7, 17) wheel comes into contact with the reinforcement ring as a result of the radial stretching of the blades caused by centrifugal forces when the predetermined speed value is exceeded.

3. An arrangement according to claim 1 or 2,
**characterized in**
**that** the at least one bladed turbine wheel (7) consists of plastic or a light metal.

## Revendications

1. Arrangement d'une turbine de détente de gaz (1) dans un système de tuyauterie d'alimentation en gaz ;
la turbine de détente de gaz (1) étant raccordée à un moteur/générateur asynchrone ;
des dispositifs pour l'évacuation de l'énergie électrique produite par le fonctionnement du générateur du moteur/générateur asynchrone et pour l'admission de celle-ci dans un réseau d'alimentation en énergie étant prévus ; et
le moteur/générateur asynchrone (3) étant raccordé à un dispositif de commande (9) qui, lorsqu'une valeur de régime critique de l'arbre (6) du moteur/générateur asynchrone est dépassée, émet un signal de commande à une soupape de sécurité (10) côté admission en amont du moteur/générateur asynchrone (3) pour la fermeture (partielle) de la section de tuyauterie d'alimentation en gaz ;
**caractérisé en ce que**
le moteur/générateur asynchrone (3) est prévu dans une section de tuyaux d'alimentation en gaz (2) côté admission à une ou près d'une paroi de séparation (5, 15) au moins unique, pourvue de tuyères (4, 14) pour la détente du gaz, et que sur l'arbre (6) du moteur/générateur asynchrone (3) côté écoulement une roue mobile à aubes (7, 17) exécutée en construction allégée et entraînée par le flux de gaz est placée.

2. Arrangement selon la revendication 1,
caractérisé à ce que le long de la périphérie intérieure du tuyau d'alimentation en gaz (2) un anneau d'épaississement (8) est prévu à la hauteur de la roue mobile à aubes (7, 17) au moins unique, la distance entre le côté intérieur de l'anneau d'épaississement (8) et la périphérie de la roue mobile à aubes (7, 17) étant choisie de manière à ce que la roue mobile à aubes, en présence de régimes inférieurs à une valeur de régime prédéterminée, peut tourner librement à l'intérieur de l'anneau d'épaississement (8, 18) alors que si la valeur de régime prédéterminée est dépassée en raison de l'extension radiale des aubes due aux forces centrifuges, un contact entre la roue mobile à aubes (7, 17) et l'anneau d'épaississement (8, 18) est établi.

3. Arrangement selon les revendications 1 ou 2,
**caractérisé en ce que** l'au moins unique roue mobile à aubes (7) consiste en plastique ou en métal léger.
